**Europäisches Patentamt**

**European Patent Office**

**Office européen des brevets**

(19)

(11) Veröffentlichungsnummer : **0 339 214 B1**

(12) # EUROPÄISCHE PATENTSCHRIFT

(45) Veröffentlichungstag der Patentschrift :
**26.08.92 Patentblatt 92/35**

(51) Int. Cl.⁵ : **B65G 1/20**

(21) Anmeldenummer : **89103835.8**

(22) Anmeldetag : **04.03.89**

(54) **Lager- und Transportgestell für Flächenbauteile.**

(30) Priorität : **28.04.88 DE 3814452**

(43) Veröffentlichungstag der Anmeldung :
**02.11.89 Patentblatt 89/44**

(45) Bekanntmachung des Hinweises auf die
Patenterteilung :
**26.08.92 Patentblatt 92/35**

(84) Benannte Vertragsstaaten :
**DE FR GB**

(56) Entgegenhaltungen :
**EP-A- 0 192 613**
**DE-A- 3 531 800**

(73) Patentinhaber : **FORD-WERKE**
**AKTIENGESELLSCHAFT**
**Werk Köln-Niehl Henry-Ford-Strasse Postfach**
**60 40 02**
**W-5000 Köln 60 (DE)**
(84) **DE**
Patentinhaber : **FORD MOTOR COMPANY**
**LIMITED**
**Eagle Way**
**Brentwood Essex CM13 3BW (GB)**
(84) **GB**
Patentinhaber : **FORD FRANCE SOCIETE**
**ANONYME**
**344 Avenue Napoléon Bonaparte B.P. 307**
**F-92506 Rueil Malmaison Cedex (FR)**
(84) **FR**

(72) Erfinder : **Niederprüm, Klaus**
**Magdeburger Strasse 16**
**W-5010 Bergheim (DE)**

(74) Vertreter : **Messulam, Alec Moses**
**A. Messulam & Co. 24 Broadway**
**Leigh on Sea Essex SS9 1BN (GB)**

EP 0 339 214 B1

Jouve, 18, rue Saint-Denis, 75001 PARIS

## Beschreibung

Die Erfindung bezieht sich auf ein Lager- und Transportgestell für im wesentlichen gleichformatige Flächenbauteile der durch den Oberbegriff des Patentanspruchs 1 angegebenen Gattung.

Bei einem aus der DE-PS 33 33 118 bekannten Lager- und Transportgestell dieser Art weisen die Träger eine aufrechte Anordnung an einer Basispalette auf, die für eine Transportmöglichkeit des Gestells mittels Gabelstaplern ausgebildet ist. Die einzelnen Tragarme nehmen damit bei der Belastung mit den Flächenbauteilen eine horizontal ausgerichtete Abstützlage ein, in die sie aus einer jeweils schräg nach oben ausgerichteten Zwischenlage mit einer Begrenzung durch eine Anschlagstellung ihres Verriegelungsarmes verschwenkt werden. Das aufeinanderfolgende Verschwenken der Tragarme in diese Zwischenlage wird bei dem bekannten Gestell andererseits durch ein wechselseitig direktes Zusammenwirken der Steuerarme gesteuert, deren abgewinkelte Ausbildung das Einschwenken der Tragarme in die Ruhelage im Zusammenwirken mit einem an jedem Tragarm noch vorgesehenen Gegengewicht unterstützen. Das bekannte Gestell weist schließlich noch einen Verriegelungsteil in der Ausbildung eines zu dem Träger parallel versetzbaren Verriegelungsbalkens auf, mit dem die Anschlagstellung der Verriegelungsarme gemeinsam verriegelt und damit auch die Abstützlage der Tragarme gemeinsam gesichert werden kann. Der Verriegelungsbalken ist dafür innerhalb des Profilquerschnitts des Trägers derart angeordnet, daß er bei der Überführung in die verriegelnde Relativlage auch noch ein Ausschwenken derjenigen Tragarme im Zusammenwirken mit ihrem jeweiligen Verriegelungsarm steuert, die wegen einer fehlenden Belastung mit einem Flächenbauteil zuvor noch ihre eingeschwenkte Ruhelage eingenommen haben. Wenn somit bei diesen bekannten Gestell der Verriegelungsbalken seine verriegelnde Relativlage einnimmt, dann sind in dieser alle Tragarme in ihre ausgeschwenkte Abstützlage unabhängig davon gebracht, ob auf die Tragarme ein Flächenbauteil abgelegt wurde oder nicht. Hieraus können sich für die Handhabung des bekannten Lager- und Transportgestell gewisse Nachteile ergeben ebenso wie auch aus der Tatsache, daß bei einer von der aufrechten Anordnung der Träger abweichenden Ausrichtung ein zuverlässiges Verschwenken der Tragarme zwischen der jeweiligen Ruhelage über die Zwischenlage in die Abstützlage und umgekehrt nicht immer gewährleistet sein wird. Schließlich ist es bei dem bekannten Lager- und Transportgestell, bei dem die Tragarme im übrigen die kostensparende Ausbildung als mit den Steuer- und Verriegelungsarmen sowie auch mit Schwenkbolzen einstückige Drahtbiegeteile aus Rundmaterial haben, nicht ohne weiteres möglich, das an jedem Träger durch Lagerschlitze für die Schwenkbolzen der Tragarme festgelegte gegenseitige Abstandsmaß der Tragarme auf den doppelten oder auch auf den dreifachen Wert zu vergrößern, weil dann mit den Steuerarmen nicht mehr das Ausschwenken der Tragarme aus der Ruhelage in die Zwischenlage gesteuert werden kann.

Aus der DE-A-35 31 800 ist ein Lager- und Transportgestell der eingangs genannten Art bekannt, bei dem die Aufgabenstellung, dieses Lager- und Transportgestell sowohl für eine horizontale als auch vertikale Lagerung der Blechteile verwendbar und zur Aufnahme unterschiedlicher Flächenbauteile im Abstand der Tragarme veränderbar zu machen/bereits gelöst ist.

Die Tragarme werden hierzu über Rückstellfedern in ihre Ruhelage vorgespannt, und ihr Verschwenken in die Zwischenlage wird durch aufeinanderfolgendes Zusammenwirken von Steuerarmen mit an den Tragarmen noch vorgesehenen Stellarmen bewirkt. Die Veränderung des Stapelabstandes der Flächenbauteile wird durch Maßnahmen zur Höhenverstellung der Lagerung der Tragarme bewirkt, wobei sowohl eine kontinuierliche Veränderung mittels sich längs erstreckender Nuten als auch eine diskontinuierliche Veränderung in Form von angeordneten Bohrungen in den Trägern beschrieben wird.

Die Aufgabe der Erfindung ist es, ein Lager- und Transportgestell der im Oberbegriff des Patentanspruches 1 erläuterten Art derart zu verbessern, daß dieses aus DE-A-35 31 800 bekannte und oben erläuterte Lager- und Transportgestell in zweckmäßiger Weise verbessert wird, so daß jeder Tragarm unmittelbar nach Übergang in seine Abstützlage direkt gesichert werden kann und durch die vorgenommene Verriegelung nicht auch die unbelasteten Tragarme in ihre Abstützlage überführt werden.

Gemäß der Erfindung wird diese Aufgabe gelöst, indem ein Lager- und Transportgestell gemäß dem Oberbegriff des Patentanspruches 1 die im Kennzeichenteil des Patentanspruches 1 aufgezeigten Merkmale aufweist.

Dadurch, daß an den Tragarmen auf der der Abstützseite abgewandten Seite von deren Schwenkachse zusätzlich abgewinkelte Verriegelungsarme vorgesehen sind, an welchen die Abstützlage des zugeordneten Tragarmes im Zusammenwirken mit einem relativ zu seiner Schwenkachse beweglichen Verriegelungsteil gesichert ist und die Stellarme in der mit dem zugeordneten Verriegelungsteil gesicherten Abstützlage jeden Tragarmes eine Anschlagstellung am zugeordneten Träger einnehmen, wird jetzt im Zusammenwirken mit einem jeweils dem einzelnen Verriegelungsarm zugeordneten Verriegelungsteil die Abstützlage eines jeden Tragarmes entsprechend direkt gesichert, während die noch unbelasteten Tragarme in ihrer Ruhelage verbleiben.

Ein erfindungsgemäßes Lager- und Transportgestell ist in der Zeichnung schematisch dargestellt und wird

EP 0 339 214 B1

nachfolgend näher beschrieben. Es zeigt

Fig. 1 und 2 Stirnansichten von zwei Ausführungsformen des Gestells, die sich in einer vertikalen und in einer horizontalen Anordnung der Träger voneinander unterscheiden,

Fig. 3 eine Schnittansicht eines Trägers bei dem Gestell der Ausführungsform gemäß Fig. 2,

Fig. 4 eine teilweise geschnittene Seitenansicht ebenfalls eines Trägers des Gestells der Ausführungsform gem. Fig. 2, wobei für mehrere Tragarme die von der Belastung mit einem Flächenbauteil abhängigen unterschiedlichen Schwenklagen gezeigt sind,

Fig. 5 und 6 eine Einzeldarstellung eines Tragarmes in zwei verschiedenen Ansichten,

Fig. 7 eine Seitenansicht eines Trägers entsprechend der Darstellung in Fig. 4, wobei eine zur gemeinsamen Anordnung von Verriegelungsteilen für die Tragarme vorgesehene Verriegelungsschiene in ihrer verriegelnden Relativlage dargestellt ist,

Fig. 8 eine Schnittansicht nach der Linie VIII - VIII der in Fig. 7 gezeigten Einzelheit,

Fig. 9 die Einzelheit gem. Fig.7, wobei für die Verriegelungsschiene eine Ausgangsstellung gezeigt ist, in welcher die Tragarme in ihre Ruhelage einschwenken können,

Fig. 10 eine Schnittansicht nach der Linie X - X in Fig. 9, und

Fig. 11 und 12 Darstellungen zur Erläuterung des Verschwenkens der Tragarme, wobei für ihre Lagerung an einem Träger ein maximales und ein minimales Abstandsmaß berücksichtigt sind.

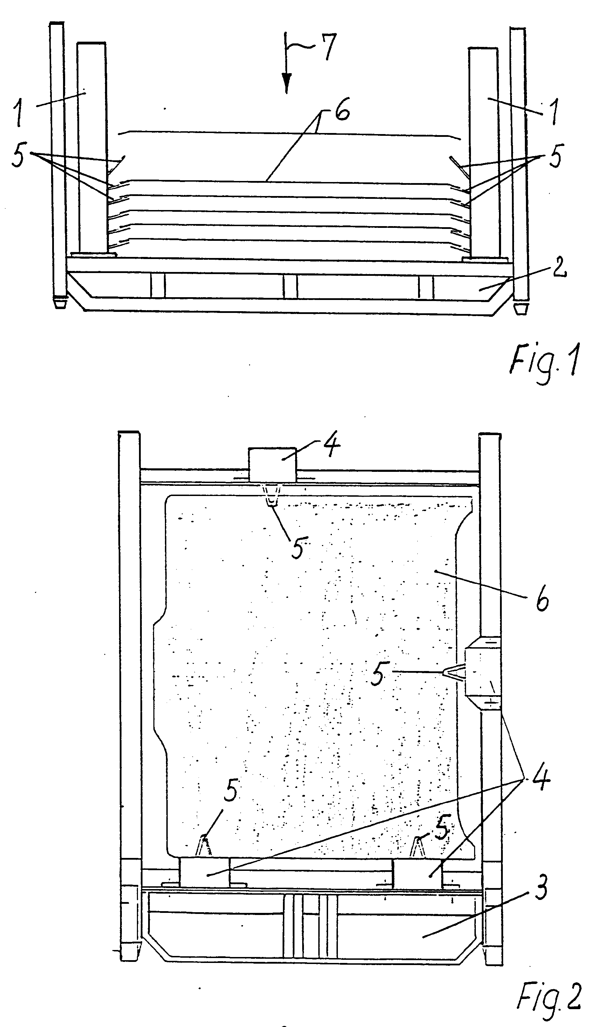

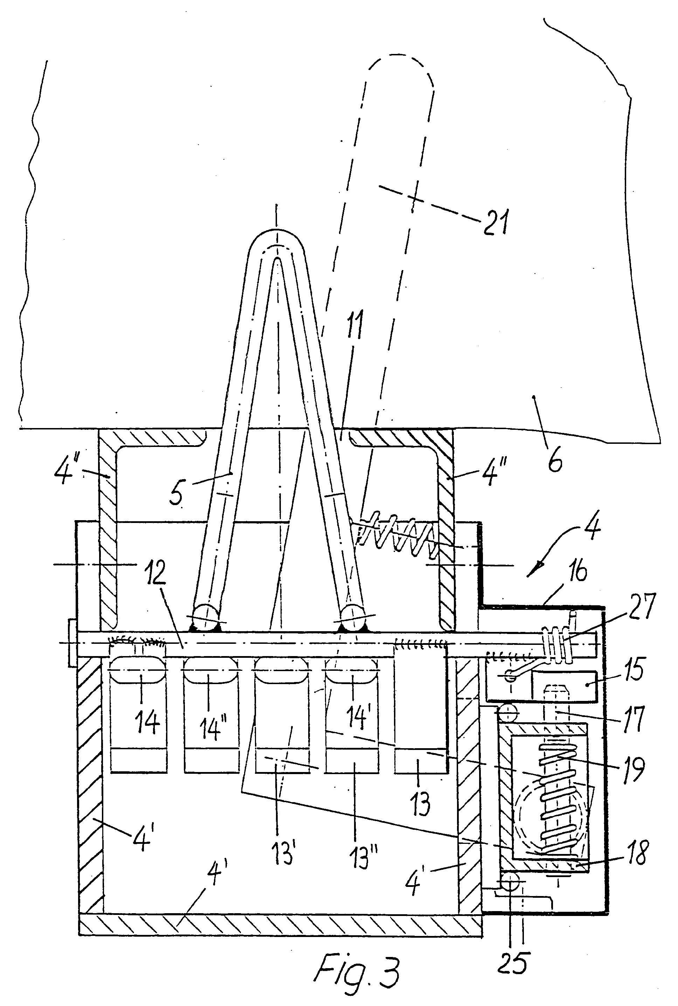

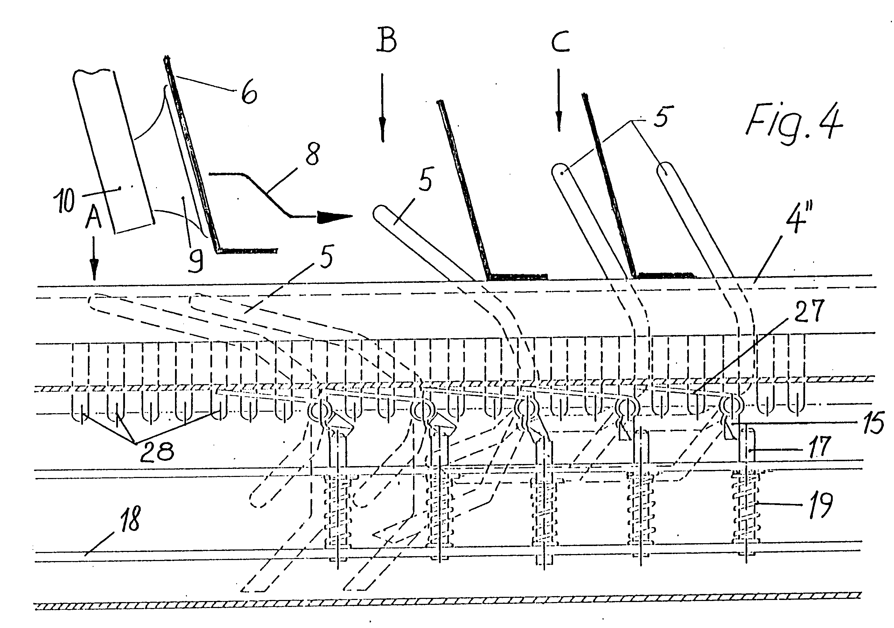

Für eine übereinstimmend stapelartige Aufnahme von im wesentlichen gleichformatigen Flächenbauteilen sind in den Fig. 1 und 2 zwei verschiedene Ausführungsformen eines Lager- und Transportgestells gezeigt, die sich untereinander im wesentlichen nur mit der jeweils gestellfesten Anordnung ihrer einzelnen Träger unterscheiden. So sind bei dem Gestell gem. Fig. 1 die einzelnen Träger 1 an einem beliebig ausgeführten Gestellrahmen 2 aufrecht angeordnet, während bei dem Gestell gem. Fig. 2 für einen entsprechenden Gestellrahmen 3 eine horizontale Anordnung von ebenfalls mehreren Trägern 4 verwirklicht ist. Den beiden Ausführungsformen ist andererseits gemeinsam, daß ihre Träger 1,4 für eine schwenkbare Lagerung einer übereinstimmenden Anzahl von einzelnen Tragarmen 5 in einem gleichen gegenseitigen Abstandsmaß vorgesehen sind, die bei jedem Träger nach einem übereinstimmenden Konstruktionsprinzip aus einer eingeschwenkten Ruhelage über eine zur gemeinsamen Belastung mit einem Flächenbauteil 6 gleichzeitig bei allen Trägern bereit gehaltene Zwischenlage in eine ausgeschwenkte Abstützlage verschwenkbar sind. In Fig. 1 ist dabei mit den Pfeil 7 noch die vertikale Richtung verdeutlicht, in welcher hier die einzelnen Flächenbauteile 6 einzeln aufeinanderfolgend auf die bei allen Trägern 1 in eine Zwischenlage verschwenkten Tragarme 5 aufgelegt werden, wodurch dann die Tragarme unter der jeweiligen Belastung mit einem Flächenbauteil in eine vollständig ausgeschwenkte Abstützlage weiter verschwenkt werden während gleichzeitig an jedem Träger ein nächster Tragarm aus seiner normal eingeschwenkten Ruhelage in eine Zwischenlage gebracht wird. Bei der Fig. 2 ist andererseits eine entsprechende Bewegungsrichtung für die Flächenbauteile 6 senkrecht zu der Zeichenebene vorgegeben, womit analog der mit dem Pfeil 7 verdeutlichten Bewegungsrichtung auch hier von einer zu den Trägern 4 parallelen Bewegungsrichtung auszugehen ist. Diese Bewegungsrichtung ist in Fig.4 mit dem Pfeil 8 verdeutlicht und somit auch für die zeichnerischen Darstelllungen der Fig. 3 sowie der Fig. 7 bis 10 berücksichtigt.

In Fig. 3 ist Profilquerschnitt eines Trägers 4 gezeigt, der aus einzelnen Platten 4' und Winkelprofilen 4″ zusammengeschweißt sein kann.

Die Winkelprofile 4″ sind dabei für eine abstützende Anlage der Flächenbauteile 6 vorgesehen, die für eine stapelartige Aufnahme in dem Gestell gem. der Darstellung in Fig. 4 beispielsweise durch eine mit Haftsaugern 9 arbeitende Sauggreifeinrichtung 10 transportiert werden. Mit den Winkelprofilen 4″ wird dabei für den Profilquerschnitt des Trägers 4 gleichzeitig eine Schlitzöffnung 11 erhalten, über welche die Tragarme 5 für die Einnahme ihrer ausgeschwenkten Abstützlage eine über den Profilquerschnitt nach außen vorstehende Anordnung erfahren können.

Jeder Tragarm 5 besteht zweckmäßig aus einem V-förmig gebogenen Rundmaterial, das an seinen Enden an einen Schwenkbolzen 12 angeschweißt oder mit diesem einstückig ausgebildet ist. An den Schwenkbolzen 12 sind außerdem auf der zu dem Tragarm 5 abgewandten Seite ein abgewinkelter Steuerarm 13, ein im Vergleich dazu kürzerer Stellarm 14 und ein Verriegelungsarm 15 angeschweißt, wobei nur der Verriegelungsarm 15 bei allen Tragarmen eine übereinstimmende Anschweißung an einer über den Profilquerschnitt des Trägers 4 nach außen vorstehenden Teillänge des Schwenkbolzens 12 aufweist. Die Steuerarme 13 und die Stellarme 14 weisen andererseits eine Anordnung innerhalb des Profilquerschnittes auf und sind in Achsrichtung der Schwenkbolzen 12 aufeinanderfolgend auf Lücke zueinander versetzt, wie es aus der Darstellung in Fig. 3 ableitbar ist.

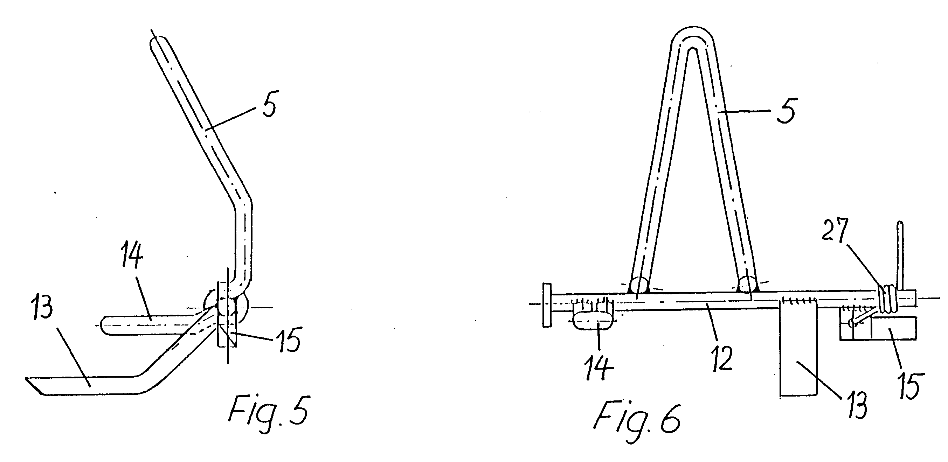

In Fig. 3 ist für den Steuerarm 13 und den Stellarm 14 eine mit der Darstellung in Fig. 6 übereinstimmende Anschweißung an den Schwenkbolzen 12 berücksichtigt und gleichzeitig gezeigt, daß der zu dem Tragarm 5 noch zugehörige Verriegelungsarm 15 eine Anordnung innerhalb eines Gehäusedeckels 16 aufweist. Mit dem

3

EP 0 339 214 B1

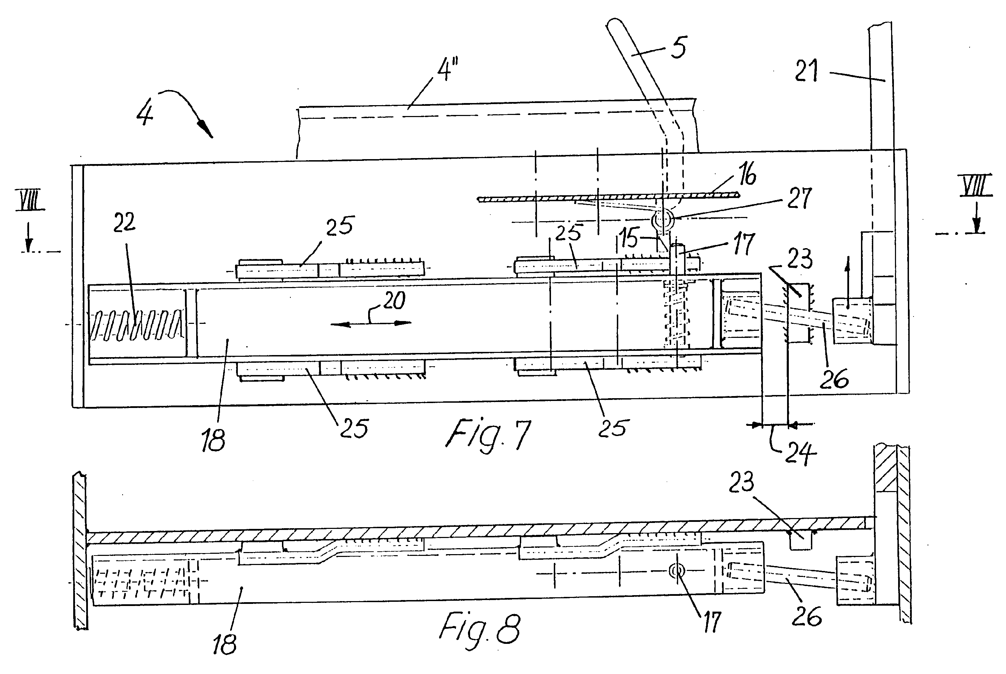

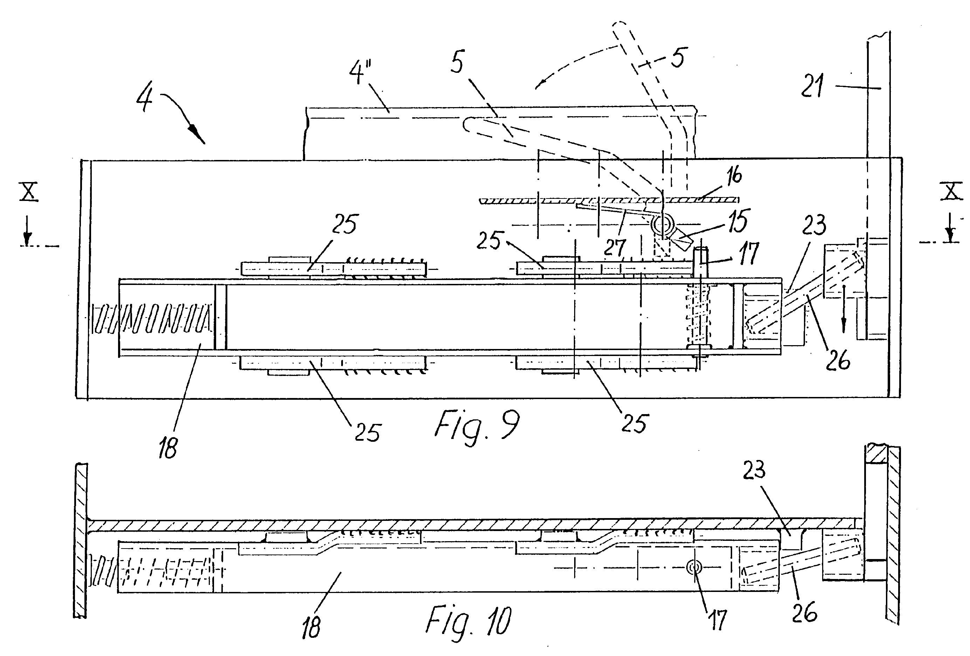

Gehäusedeckel 16 wird eine außerhalb des Profilquerschnitts des Trägers 4 angeordnete Montageeinheit abgedeckt, die mit einzelnen Verriegelungsstiften 17 ausgebildet ist, die eine Anordnung an einer gemeinsamen Verriegelungsschiene 18 aufweisen und jeweils durch eine Feder 19 in eine Eingriffslage mit einem zugehörigen Verriegelungsarm 15 vorgespannt sind. Die Verriegelungsschiene 18 ist in Richtung des in Fig. 7 gezeigten Doppelpfeils 20 durch Betätigung einer Handhabe 21 beweglich, um für das Zusammenwirken der Verriegelungsstifte 17 mit dem Verriegelungsarmen 15 eine verriegelnde Relativlage gem. der Darstellung in den Figuren 7 und 8 und eine Ausgangslage gem. den Figuren 9 und 10 zu erhalten,in welchen somit die Verriegelungsschiene 18 durch die Kraft einer Rückstellfeder 22 in eine Berührungsstellung mit einem Anschlag 23 vorgespannt wird. Der in Fig. 7 mit der Bemessung 24 verdeutlichte Verschiebeweg der Verriegelungsschiene 18, die durch eine gestellfeste Führung 25 bei der mit einem Betätigungsstift 26 übersetzten Bewegung durch die Handhabe 21 linear geführt wird, wird somit für die Einnahme der Ruhelage andererseits dafür benötigt, ein Einschwenken der Tragarme 5 in ihre Ruhelage zu ermöglichen, wobei dieses Einschwenken jeweils mit einer Feder 27 bewirkt wird, die gem. der Darstellung in Fig. 3 an dem Verriegelungsarm 15 des zugeordneten Tragarmes angreift. In diesem Zusammenhang ist die für die Figuren 7 bis 10 gewählte Darstellung noch so zu verstehen, daß hier für die Verriegelungsschiene 18 nur ein Verriegelungsstift 17 im Zusammenwirken mit dem Verriegelungsarm 15 eines zugeordneten Tragarmes 5 gezeigt ist und weitere Verriegelungsstifte sowie weitere Tragarme nur mit Mittellinien verdeutlicht sind.

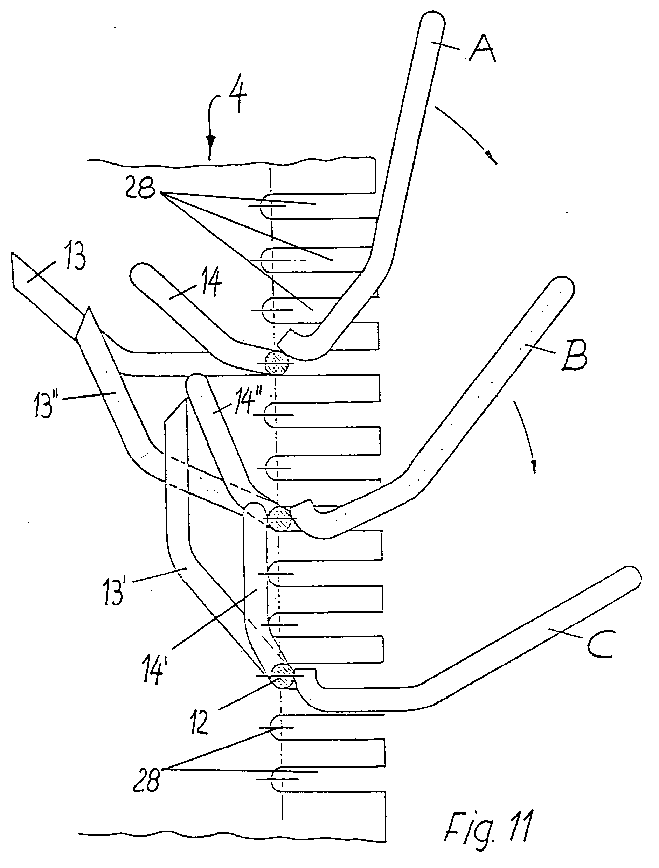

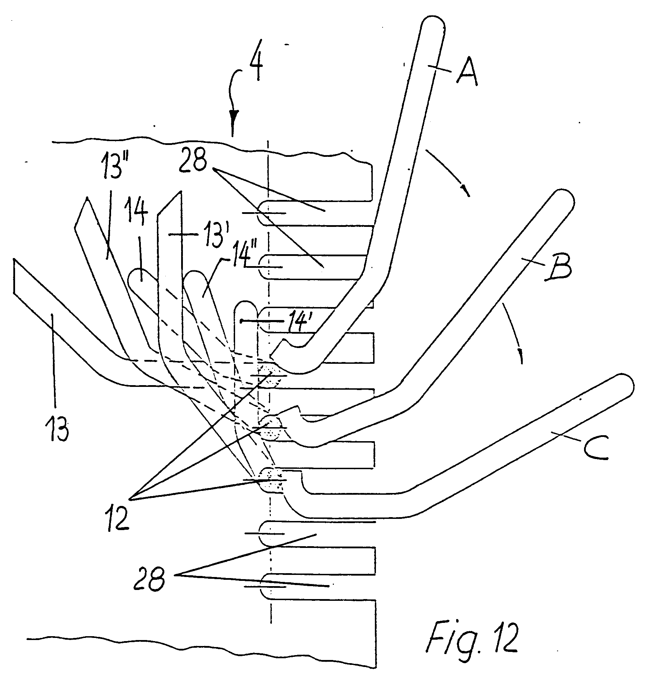

Über die Darstellung in Fig. 4 ist nun in Verbindung auch mit den Figuren 11 und 12 ableitbar, wie jeder der einzelnen Tragarme 5 aus einer eingeschwenkten Ruhelage A über eine Zwischenlage B in eine vollständig ausgeschwenkte Abstützlage C verschwenkbar ist. Wenn ein Flächenbauteil 6 mittels der Sauggreifeinrichtung 10 in Richtung des Pfeils 8 zur Aufnahme in das Regal transportiert wird, dann wird es nach seiner abstützenden Anlage an den Winkelprofilen 4″ aller Träger 4 des Gestells mit den Tragarmen 5 zur Anlage kommen, welche dann die Zwischenlage B einnehmen. Durch die Belastung mit dem Flächenbauteil werden die Tragarme dann anschließend in die Abstützlage C verschwenkt, wobei dieses Verschwenken damit gekoppelt ist, daß mit dem zugeordneten Steuerarm 13′ auf den Stellarm 14 des nächsten Tragarmes eingewirkt wird, so daß dieser aus seiner Ruhelage A in eine Zwischenlage B entgegen der Kraft der zugeordneten Rückstellfeder 27 verschwenkt wird. Sobald der mit dem Flächenbauteil belastete Tragarm seine ausgeschwenkte Abstützlage C eingenommen hat, ist dann dessen Stellarm 14′ in eine Anschlagstellung überführt, die dann auch durch das Zusammenwirken eines zugeordneten Verriegelungsstiftes 17 mit dem Verriegelungsarm 15 des betreffenden Tragarmes 5 gesichert ist. Die durch das Zusammenwirken mit einem Verriegelungsstift gesicherte Abstützlage setzt voraus, daß die Verriegelungsschiene 18 dann in die in den Fig. 7 und 8 gezeigte Relativlage bewegt ist, die es somit ermöglicht, daß beim Verschwenken der Tragarme aus der Zwischenlage B in die Abstützlage C der jeweils zugeordnete Verriegelungsarm 15 zunächst den zugeordneten Verriegelungsstift 17 gegen die Kraft seiner Feder 19 axial verschiebt, um dann nach Überwindung eines Rastpunktes die in den Fig. 4 und 7 verdeutlichte Eingriffsstellung zu erhalten. Aus der Gegenüberstellung der Fig. 11 und 12 ist dabei gleichzeitg noch ableitbar, daß dieses Verschwenken der einzelnen Tragarme unabhängig davon völlig übereinstimmend abläuft, ob die Tragarme mit ihren Schwenkbolzen 12 in Lagerschlitzen 28 der Träger 4 mit einem gegenseitigen Abstandsmaß aufgenommen sind, bei dem jeweils zwei dazwischen liegende Lagerschlitze frei bleiben oder mit einem Abstandsmaß, bei dem jeder Lagerschlitz den Schwenkbolzen eines zugeordneten Tragarmes aufnimmt. In Fig. 11 ist somit für die Schwenkbolzen 12 ein maximales Abstandsmaß berücksichtigt, das den dreifachen Wert des für die Darstellung in Fig. 12 berücksichtigten Abstandsmaß entspricht. Diese unterschiedlichen Möglichkeiten sind dabei mit den unterschiedlichen Längen und unterschiedlichen Formgebungen der Steuerarme 13 und der Stellarme 14 erhalten, deren in Achsrichtung auf Lücke versetzte Anordnung im übrigen noch aus der Fig. 3 ableitbar ist.

**Patentansprüche**

1. Lager- und Transportgestell für im wesentlichen gleichformatige Flächenbauteile (6) mit parallel zueinander gestellfest angeordneten Trägern (1,4), an denen mit einem gleichen gegenseitigen Abstandsmaß einzelne Tragarme (5) schwenkbar gelagert sind, die jeweils durch eine Rückstellfeder (27) in die Ruhelage vorgespannt sind und entgegen der Rückstellkraft aus der eingeschwenkten Ruhelage über eine zur gemeinsamen Belastung mit einem Flächenbauteil gleichzeitig bei allen Trägern (1,4) bereitgehaltenen Zwischenlage in eine ausgeschwenkte Abstützlage verschwenkbar sind, wobei das von einer aufeinanderfolgenden Belastung abhängige, zeitlich jeweils nachfolgende Verschwenken der Tragarme (5) von der Ruhelage in die Zwischenlage durch das aufeinanderfolgende Zusammenwirkens von Steuerarmen (13) jeweils mit an den Tragarmen (5) noch vorgesehenen Stellarmen (14) gesteuert wird, die an den Tragarmen (5) auf der der Abstützseite abgewandten Seite ihrer Schwenkachse (12) angeordnet

4

sind,

**dadurch gekennzeichnet, daß**

an den Tragarmen (5) auf der der Abstützseite abgewandten Seite der Schwenkachse (12) Zusätzlich abgewinkelte Verriegelungsarme (15) vorgesehen sind, an welchen die Abstützlage des zugeordneten Tragarmes (5) im Zusammenwirken mit einem relativ zu seiner Schwenkachse (12) beweglichen Verriegelungsteil (17) gesichert ist, und - die Stellarme (14) in der mit dem zugeordneten Verriegelungsteil (17) gesicherten Abstützlage jeden Tragarmes (5) eine Anschlagstellung am zugeordneten Träger (1) einnehmen.

2. Lager- und Transportgestell nach Anspruch 1,
   **dadurch gekennzeichnet, daß**
   die Stell- und Steuerarme (14 bzw. 13) mit einer solchen wechselseitig abgestimmten Länge und Formgebung versehen sind, daß der gegenseitige Abstand der Schwenklager (28) für die Tragarme (5) im Vergleich zu einem ihren engsten Abstand ergebenden Normalmaß auf den doppelten oder dreifachen Wert vergrößerbar ist.

3. Lager- und Transportgestell nach Anspruch 1 oder 2,
   **dadurch gekennzeichnet, daß**
   jeder Verriegelungsteil (17) aus einem im Schwenkweg des Verriegelungarmes (15) am zugeordneten Tragarm (5) angeordneten, durch eine Feder (19) in eine die Abstützlage des Tragarmes (5) sichernde Relativlage vorgespannten Verriegelungsstift (17) gebildet ist.

4. Lager- und Transportgestell nach einem der Ansprüche 1 bis 3,
   **dadurch gekennzeichnet, daß**
   die Verriegelungsteile (17) aller Tragarme (5) eines Trägers (1,4) jeweils an einer gemeinsamen Verriegelungsschiene (18) angeordnet sind, die parallel zu dem Träger (1,4) ausgerichtet und zwischen einer die Abstützlage aller Tragarme (5) gemeinsam verriegelnden Relativlage und einer ihr Einschwenken zurück in die Ruhelage ermöglichenden Ausgangsstellung beweglich ist.

5. Lager- und Transportgestell nach Anspruch 4,
   **dadurch gekennzeichnet, daß**
   die Verriegelungsschiene (18) als eine mit den Verriegelungsteilen (17) gemeinsame Montageeinheit ausgebildet ist und eine bezüglich des Profilquerschnittes des Trägers (1,4) außenliegende Anordnung aufweist und
   daß die verriegelungsarme (15) an über den profilquerschnitt des Trägers (1,4) jeweils vorstehenden Achsverlängerungen der Tragarme (5) vorgesehen sind, deren Stell- und Steuerarme (14 bzw. 13) eine in Achsrichtung aufeinanderfolgend auf Lücke versetzte Anordnung innerhalb des Profilquerschnittes aufweisen.

6. Lager- und Transportgestell nach einem der Ansprüche 1 bis 5,
   **dadurch gekennzeichnet, daß**
   die Rückstellfedern (27) der Tragarme (5) an den Verriegelungsarmen (15) angreifen.

## Claims

1. A bearing and conveying frame for flat components (6) of essentially similar format and having supports (1, 4) which are arranged parallel to one another and fixed to the frame and on which individual support arms (5) are pivotably mounted at an equal mutual distance, the support arms (5) being pre-stressed in each case by a return spring (25) into the rest position and pivotable against the return force from the swung-in rest position into a swung-out supporting position by way of an intermediate position kept available at the same time in all the supports (1, 4) for joint loading with a flat component, the pivoting - dependent upon a successive loading and following subsequently in time in each case - of the support arms (5) from the rest position into the intermediate position being controlled by the successive cooperation of control arms (13) in each case with adjusting arms (14) still provided on the support arms (5) and arranged on the support arms (5) on the side of their pivot axis (12) remote from the support side, characterised in that locking arms (15), which are additionally angled on the side of the pivot axis (12) remote from the support side and on which the supporting position of the associated support arm (5) is secured in cooperation with a locking member (17) movable relative to its pivot axis (12), and the adjusting arms (14) in the supporting position of each support arm (5) secured by the associated locking member (5) occupy a stop position on the associated support (1), are provided on the support arms (5).

2. A bearing and conveying frame according to Claim 1, characterised in that the adjusting and control arms (14 and 13 respectively) are provided with a reciprocally matching length and shape such that the mutual spacing of the pivot bearings (28) for the support arms (5) can be increased to a value two or three times a normal dimension which provides their closest spacing.

3. A bearing and conveying frame according to Claim 1 or 2, characterised in that each locking part (17) is formed by a locking pin (17) arranged in the pivot path of the locking arm (15) on the associated support arm (5) and pre-stressed by a spring (19) into a relative position securing the supporting position of the support arm (5).

4. A bearing and conveying frame according to any one of Claims 1 to 3, characterised in that the locking parts (17) of all the arms (5) of a support (1, 4) are arranged in each case on a common locking rail (18) which is orientated parallel to the support (1, 4) and is movable between a relative position jointly locking the supporting position of all the support arms (5) and an initial setting allowing them to swing back into the rest position.

5. A bearing and conveying frame according to Claim 4, characterised in that the locking rail (18) is formed as an assembly unit common to the locking parts (17) and comprises an arrangement lying on the outside with respect to the profiled cross-section of the support (1, 4), and the locking arms (17) are provided on axial extensions of the support arms (5) which project in each case beyond the profiled cross-section of the support (1, 4) and the adjusting and control arms (14 and 13 respectively) of which are arranged offset in succession in the axial direction in a staggered manner inside the profiled cross-section.

6. A bearing and conveying frame according to any one of Claims 1 to 5, characterised in that the return springs (27) of the support arms (5) engage on the locking arms (15).

## Revendications

1. Châssis de stockage et de transport destiné à des éléments de construction plats (6), d'un format identique pour l'essentiel, et comprenant des supports (1, 4) qui sont disposés parallèlement entre eux en étant solidaires du châssis et sur lesquels sont montés pivotants, avec une même valeur de leur distance mutuelle, des bras porteurs individuels (5) qui, à chaque fois, sont rappelés en position de repos par un ressort de rappel (27) et peuvent être amenés à pivoter, à l'encontre de la force de rappel, depuis la position de repos où ils ont pivoté vers l'intérieur jusque dans une position d'appui où ils ont pivoté vers l'extérieur, en passant par une position intermédiaire où ils sont tenus prêts, en même temps pour tous les supports (1, 4), en vue d'être chargés en commun par un élément de construction plat, cependant que le pivotement des bras porteurs (5) depuis la position de repos jusque dans la position intermédiaire, lequel dépend d'un chargement successif et a lieu à chaque fois de manière consécutive dans le temps, est commandé par la coopération successive de bras de commande (13) avec des bras de renvoi (14) qui sont encore prévus à chaque fois sur les bras porteurs (5) et qui sont disposés sur les bras porteurs (5) sur le côté de leur axe de pivotement (12) opposé au côté d'appui, caractérisé par le fait qu'il est prévu en outre sur les bras porteurs (5), sur le côté de l'axe de pivotement (12) qui est opposé au côté d'appui, des bras de verrouillage coudés (15) sur lesquels la position d'appui du bras porteur associé (5) est bloquée en coopération avec une pièce de verrouillage (17) qui est mobile par rapport à son axe de pivotement (12), et que les bras de renvoi (14), dans la position d'appui de chaque bras porteur (5) qui est bloquée par la pièce de verrouillage associée (17), prennent une position en butée sur le support associé (1).

2. Châssis de stockage et de transport selon la revendication 1, caractérisé par le fait les bras de renvoi et de commande (14 et 13, respectivement) présentent une longueur et une forme qui sont accordées mutuellement de telle manière que la distance mutuelle des paliers de pivotement (26) destinés aux bras porteurs (5), par comparaison avec une valeur normale fournissant leur distance la plus courte, puisse être augmentée jusqu'à la valeur double ou triple.

3. Châssis de stockage et de transport selon la revendication 1 ou 2, caractérisé par le fait que chaque pièce de verrouillage (17) est constituée par une tige de verrouillage (17) qui est disposée sur le bras porteur associé (5), sur le trajet de pivotement du bras de verrouillage (15), et qui est rappelée par un ressort (19) jusque dans une position relative bloquant la position d'appui du bras porteur (5).

4. Châssis de stockage et de transport selon l'une des revendications 1 à 3, caractérisé par le fait que les pièces de verrouillage (17) de tous les bras porteurs (5) d'un support (1, 4) sont disposées à chaque fois sur un rail de verrouillage commun (18) qui est dirigé parallèlement au support (1, 4) et qui est mobile entre une position relative verrouillant à la fois la position d'appui de tous les bras porteurs (5) et une position de départ permettant leur pivotement en retour vers l'intérieur jusque dans la position de repos.

5. Châssis de stockage et de transport selon la revendication 4, caractérisé par le fait que le rail de verrouillage (18) est réalisé sous la forme d'une unité de montage commune aux pièces de verrouillage (17), et qu'il présente une disposition située à l'extérieur par rapport à la section transversale profilée du support (1, 4), et par le fait que les bras de verrouillage (15) sont prévus sur des prolongements de l'axe des bras porteurs (5) qui sont à chaque fois en saillie au-delà de la section transversale profilée du support (1, 4), et dont les bras de renvoi et de commande (14 et 13, respectivement) sont disposés à l'intérieur de la section transversale profilée en étant décalés successivement et placés en des endroits libres.

6. Châssis de stockage et de transport selon l'une des revendications 1 à 5, caractérisé par le fait que les ressorts de rappel (27) des bras porteurs (5) viennent en prise sur les bras de verrouillage (15).

Fig.1

Fig.2

Fig. 3

Fig. 4

Fig.5

Fig.6

Fig. 7

Fig. 8

EP 0 339 214 B1

Fig. 9

Fig. 10

Fig. 11

*Fig. 12*